# EUROPEAN PATENT APPLICATION

(11) **EP 4 845 172 A1**
(43) Date of publication of application: **25.11.2026**
(21) Application number: 25742303.8
(22) Date of filing: 16.01.2025
(51) Int. Cl.: H04N 23/69, H04N 23/65, H04N 23/54, H04N 23/55, H04N 23/57, G03B 17/12, G05B 6/02

(54) **CAMERA MODULE, CAMERA ACTUATOR, AND CONTROL METHOD THEREOF**

(30) Priority: 17.01.2024 KR 20240007464; 29.03.2024 KR 20240043180
(71) Applicant: LG Innotek Co., Ltd., Seoul 07796 (KR)
(72) Inventor: OH, Jun Seok, Seoul 07796 (KR); JANG, Dae Sik, Seoul 07796 (KR); WON, Chang Hee, Seoul 07796 (KR); KIM, Hyung Sun, Seoul 07796 (KR)
(74) Representative: DREISS Patentanwälte PartG mbB
(86) International application number: PCT/KR2025/099032
(87) International publication number: WO 2025/155155

(57) **Abstract**

A camera module according to an embodiment disclosed herein comprises: a first camera actuator; a second camera actuator disposed in a first direction from the first camera actuator; a circuit board including an image sensor disposed at the rear end of the second camera actuator; and a third camera actuator disposed at the upper end of the first camera actuator or the second camera actuator. The third camera actuator includes a magnification lens, and the magnification lens moves in the first direction from the upper end of the first camera actuator or the second camera actuator.

## Description

### [Technical Field]

An embodiment relates to a camera module, a camera actuator, and a method of controlling the same.

### [Background Art]

Cameras are devices which capture photos or videos of subjects and are mounted in portable devices, drones, vehicles, and the like. A camera module may have an image stabilization (IS) function for correcting or preventing the image shaking caused by a user's movement to improve the quality of the images, an auto-focus function for automatically adjusting a gap between an image sensor and a lens to align a focal length of the lens, and a zoom function for increasing or decreasing the magnification of an image of a distant subject to capture the image using a zoom lens.

The conventional camera module includes a plurality of lens groups and a prism and changes a magnification by adjusting a field of view (FoV) through changing the position of the lenses along an optical axis. The position of the lenses is changed through position control by an actuator. In this case, there is a problem in that a limit exists in the magnification range that can be changed due to the size limitation of the camera module.

As the use of smartphones increases, various functions of cameras mounted in smartphones are required. There is the trend of requiring not only price competitiveness for the camera module but also high performance. As the camera module, a module in which an auto-focus (AF)/zoom function is implemented is used. As the specifications of the camera module gradually require higher magnification, there is a limit in implementing performance through existing technology.

An actuator of the conventional camera module controls the movement of a lens assembly and detects a position thereof through Proportional-Integral-Derivative (PID) control. In this case, when the target position of the lens assembly is different from the detected position thereof, the error is calculated and corrected. However, in the conventional camera actuator, when saturation of a driver occurs because the control value of a current according to the calculated error is greater than the limit of a current by which the driver of the actual camera actuator can be operated, the integral value of the error is accumulated to a large value. Accordingly, there is a problem in that a variation occurs between the target position and the actual driving position.

### [Description of Invention]

### [Technical Problem]

An embodiment provides a camera module capable of expanding a magnification range.

In addition, an embodiment provides a camera module capable of increasing a magnification range without increasing the size of the module.

An embodiment provides a camera actuator with reduced driving error of a lens assembly and a method of controlling the same.

In addition, an embodiment provides a camera actuator having reduced occurrence of defects.

The problems to be solved by the embodiments are not limited thereto, and purposes or effects which may be understood from solutions or embodiments of the problems to be described below are also included.

### [Technical Solution]

A camera module according to an embodiment may include: a first camera actuator; a second camera actuator disposed in a first direction from the first camera actuator; a circuit board including an image sensor disposed at a rear end of the second camera actuator; and a third camera actuator disposed at an upper end of the first camera actuator or the second camera actuator, wherein the third camera actuator includes a magnification lens, and the magnification lens moves at the upper end of the first camera actuator or the second camera actuator in the first direction.

The first camera actuator may include a prism, the magnification lens may overlap the prism in a second direction, and the second direction may be an incident direction of light and may be a direction perpendicular to the first direction.

The magnification lens may be disposed perpendicular to the second direction and allow the light to pass through the prism.

The third camera actuator may include a lens assembly configured to move in the first direction, and the lens assembly may be coupled to the magnification lens.

The lens assembly may include a fixing portion surrounding the magnification lens, and the fixing portion may be disposed perpendicular to the second direction.

A width of the third camera actuator in the first direction may be greater than a width of the first camera actuator in the first direction and may be smaller than a sum of the width of the first camera actuator in the first direction and a width of the second camera actuator in the first direction.

A width of the third camera actuator in the first direction may be greater than twice a width of the magnification lens in the first direction.

A movement distance of the lens assembly in the first direction may be greater than a width of the magnification lens in the first direction.

The third camera actuator may include a first region overlapping the first camera actuator in the second direction and a second region overlapping the second camera actuator in the second direction.

A width of the first region in the first direction may be smaller than a width of the second region in the first direction.

A width of the third camera actuator in the second direction may be smaller than a width of each of the first camera actuator and the second camera actuator in the second direction.

The third camera actuator may include a driving magnet disposed on the lens assembly, and the driving magnet may not overlap the magnification lens in a third direction, wherein the third direction is a direction perpendicular to the first direction and the second direction.

The third camera actuator may include a first opening through which the light is incident, and the first opening may overlap the prism in the second direction.

The magnification lens may not overlap the first camera actuator in the second direction and may overlap the second camera actuator in the second direction, wherein the second direction is an incident direction of light and is a direction perpendicular to the first direction.

A camera actuator according to an embodiment may include: a housing; a lens assembly configured to move in the housing in an optical axis direction; a driving unit configured to move the lens assembly; a sensor unit configured to detect a position of the lens assembly; and a monitoring unit configured to measure a current of the driving unit, wherein the driving unit includes a control unit and a tuner, and the tuner initializes a control gain of the control unit when the monitoring unit determines that the current of the driving unit exceeds a reference value.

The driving unit may include a comparison unit configured to compare the position of the lens assembly detected by the sensor unit with a target position to calculate an error value.

The control unit may generate a control signal by applying the control gain corresponding to the error value.

The driving unit may include a driving circuit configured to generate a driving signal for moving the lens assembly according to the control signal.

The control gain may be a gain value according to Proportional-Integral-Derivative (PID) control.

The control gain may include a first control gain to a third control gain.

The tuner may simultaneously set the first control gain to the third control gain to 0 when the monitoring unit determines that a current of the driving unit exceeds the reference value.

The tuner may return the first control gain to the third control gain to original states after certain recovery times following initialization of the first control gain to the third control gain.

The recovery times of the first control gain to the third control gain may differ from each other.

The recovery time of the first control gain may be smaller than the recovery time of the second control gain, and the recovery time of the second control gain may be smaller than the recovery time of the third control gain.

The first control gain may be a proportional control gain, the second control gain may be an integral control gain, and the third control gain may be a derivative control gain.

A method of controlling a camera actuator according to an embodiment may include: an operation of measuring, by a monitoring unit, a current flowing through a driving unit; an operation of determining, by the monitoring unit, whether the current flowing through the driving unit exceeds a reference value; and an operation of initializing, by a tuner, a control gain of a control unit to 0 when the current flowing through the driving unit exceeds the reference value.

The method of controlling a camera actuator according to the embodiment may include an operation of returning, by the tuner, the control gain to an original state.

The method of controlling a camera actuator according to the embodiment may include an operation of detecting, by a sensor unit, a position of a lens assembly.

The method of controlling a camera actuator according to the embodiment may include an operation of calculating, by a comparison unit, an error value by comparing the position of the lens assembly detected by the sensor unit with a target position.

The method of controlling a camera actuator according to the embodiment may include an operation of generating, by the control unit, a control signal by applying the control gain corresponding to the error value.

The method of controlling a camera actuator according to the embodiment may include an operation of generating, by the driving unit, a driving signal for moving the lens assembly according to the control signal.

### [Advantageous Effects]

According to an embodiment, it is possible to provide a camera module capable of expanding a magnification range.

In addition, it is possible to provide a camera module capable of increasing the magnification range without increasing the size of the module.

According to an embodiment, it is possible to provide a camera actuator with reduced driving error and a method of controlling the same.

In addition, it is possible to provide a camera actuator with reduced occurrence of defects.

The various and beneficial advantages and effects of the present invention are not limited to the above description and may be more easily understood in the course of describing specific embodiments of the present invention.

### [Description of Drawings]

FIG. 1 is a perspective view of a camera module according to an embodiment.
FIG. 2 is an exploded perspective view of the camera module according to the embodiment.
FIG. 3 is a cross-sectional view along line AA in FIG. 1.
FIG. 4 is a cross-sectional view showing a state in which a lens assembly according to the embodiment has moved in FIG. 3.
FIG. 5 is a perspective view of a third camera actuator according to the embodiment.
FIG. 6 is a cross-sectional view along line BB in FIG. 5.
FIG. 7 is a perspective view of the lens assembly according to the embodiment.
FIG. 8 is a side view of the lens assembly according to the embodiment.
FIG. 9 is a top view of the lens assembly according to the embodiment.
FIG. 10 is a perspective view of a body according to the embodiment.
FIG. 11 is a perspective view of a shield can according to the embodiment.
FIG. 12 is a perspective view of a circuit board according to the embodiment.
FIG. 13 is a perspective view of a camera module according to an embodiment.
FIG. 14 is an exploded perspective view of the camera module according to the embodiment.
FIG. 15 is a cross-sectional view along line AA' in FIG. 13.
FIG. 16 is a configuration diagram of a camera actuator according to an embodiment.
FIG. 17 is a configuration diagram of a driving unit according to an embodiment.
FIG. 18 is a flowchart for describing the operating principle of the camera actuator according to the embodiment.
FIG. 19 is a graph showing the state change over time of the camera actuator according to the embodiment.
FIG. 20 is a flowchart of a method of controlling a camera actuator according to an embodiment.
FIG. 21 is a graph showing the state change over time of a conventional camera actuator.
FIG. 22 is a graph showing the state change over time of the camera actuator according to the embodiment.
FIG. 23 is a perspective view of a mobile terminal to which the camera module according to the embodiment is applied.
FIG. 24 is a perspective view of a vehicle to which the camera module according to the embodiment is applied.

### [Modes of the Invention]

Hereinafter, exemplary embodiments of the present invention will be described in detail with reference to the attached drawings.

However, the technical idea of the present invention is not limited to some embodiments to be described, but can be implemented in various different forms, and within the scope of the technical idea of the present invention, one or more of the components among the embodiments can be selectively combined or substituted and used.

In addition, terms (including technical and scientific terms) used in the embodiments of the present invention can be interpreted as having a meaning that can be generally understood by a person of ordinary skill in the technical field to which the present invention belongs, unless explicitly and specifically defined and described, and terms that are commonly used, such as terms defined in a dictionary, can be interpreted in consideration of the contextual meaning of the relevant technology.

Additionally, the terms used in the embodiments of the present invention are for the purpose of describing the embodiments and are not intended to limit the present invention.

In this specification, the singular may also include the plural unless specifically stated otherwise in the phrase, and when it is described as "at least one (or one or more) of A, B, and C," it may include one or more of all combinations in which A, B, and C can be combined.

Additionally, in describing components of embodiments of the present invention, terms such as first, second, A, B, (a), (b), and the like may be used.

These terms are only intended to distinguish one component from another, and the nature, order, sequence, and the like of the component are not limited by these terms.

Further, when a certain component is described as being 'connected,' 'coupled,' or 'joined' to another component, it may include not only cases where the component is directly connected, coupled, or joined to the other component, but also cases where the component is 'connected,' 'coupled,' or 'joined' by still another component between the component and the other component.

Additionally, when one component is described as being formed or disposed "above (upper) or below (lower)" another component, above (upper) or below (lower) includes not only cases where the two components are in direct contact with each other, but also cases where one or more still other components are formed or disposed between the two components. Additionally, when expressed as "above (upper) or below (lower)," it may include the meaning of not only the upward direction but also the downward direction based on one component.

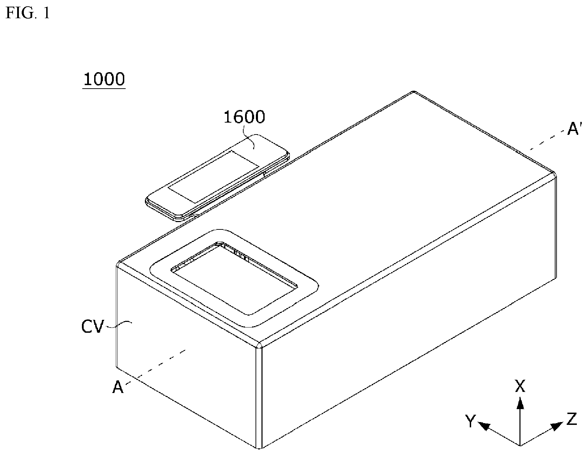

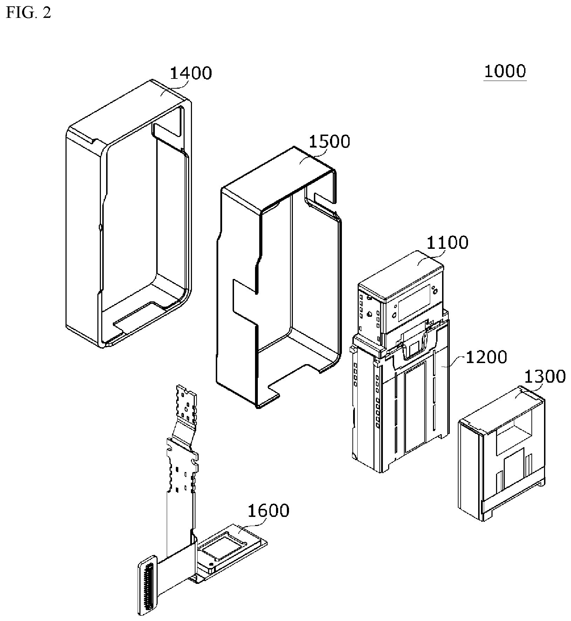

FIG. 1 is a perspective view of a camera module according to an embodiment, and FIG. 2 is an exploded perspective view of the camera module according to the embodiment.

Referring to FIGS. 1 and 2, a camera module 1000 according to an embodiment may include a first camera actuator 1100, a second camera actuator 1200, a third camera actuator 1300, a body 1400, a shield can 1500, and a circuit board 1600.

Here, the first camera actuator 1100 may be interchangeably referred to as a first actuator, the second camera actuator 1200 may be interchangeably referred to as a second actuator, and the third camera actuator 1300 may be interchangeably referred to as a third actuator. The camera module 1000 according to an embodiment may include the first camera actuator 1100.

The first camera actuator 1100 may be an optical image stabilization (OIS) actuator. For example, the first camera actuator 1100 may move an optical member in a direction perpendicular to an optical axis (the axis of incident light).

The first camera actuator 1100 may include a fixed focal length lens disposed in a predetermined barrel (not shown). The fixed focal length lens may also be referred to as a "single focal length lens" or a "prime lens."

The first camera actuator 1100 may change an optical path. In the embodiment, the first camera actuator 1100 may vertically change the optical path through an internal optical member (for example, a prism or a mirror). For example, the optical member may change light from an X-axis direction to a Z-axis direction. Alternatively, the optical member may change an axis of light from a first axis to a second axis. With this configuration, even though the thickness of the mobile terminal is reduced, a configuration of lenses having sizes greater than the thickness of the mobile terminal may be disposed in the mobile terminal to perform magnification, AF, zoom, and OIS functions by changing the optical path.

However, the embodiment is not limited thereto, and the first camera actuator 1100 may vertically change the optical path multiple times or at a predetermined angle.

The first camera actuator 1100 may include a housing, a back cover epoxy, a housing epoxy, and a flexible printed circuit board (FPCB). The first camera actuator 1100 may include a prism 1110.

The camera module 1000 according to an embodiment may include the second camera actuator 1200 disposed at a rear end of the first camera actuator 1100.

The second camera actuator 1200 may be disposed at the rear end of the first camera actuator 1100. The second camera actuator 1200 may be coupled to the first camera actuator 1100. Further, the second camera actuator 1200 and the first camera actuator 1100 may be coupled in various ways.

Furthermore, the second camera actuator 1200 may be a zoom actuator or an AF actuator. For example, the second camera actuator 1200 may support one or a plurality of lenses and move the lenses in response to a control signal from a predetermined control unit to perform an auto-focus function or a zoom function.

The second camera actuator 1200 may include a printed circuit board (PCB), a main barrel, a barrel cover, a front cover tape, an upper cover tape, and a rear cover tape.

A lens assembly may be disposed between the first camera actuator 1100 and the second camera actuator 1200.

Light may be incident into the first camera actuator 1100 through an opening region located in an upper surface of the first camera actuator 1100. That is, light is primarily incident into the first camera actuator 1100 in a second direction (for example, the X-axis direction, based on incident light), and an optical path may be changed to a first direction (for example, the Z-axis direction) through the optical member. Further, light may pass through the second camera actuator 1200 and may be incident on an image sensor IS located at one end of the second camera actuator 1200 (PATH).

The camera module 1000 according to the embodiment may include the third camera actuator 1300 disposed at an upper end of the first camera actuator 1100.

The third camera actuator 1300 may be disposed at the upper end of the first camera actuator 1100. The third camera actuator 1300 may be an actuator which drives a magnification lens. For example, the third camera actuator 1300 may support the magnification lens and perform a function of adjusting the magnification of the camera module by moving the lens according to a control signal from a predetermined control unit. The third camera actuator 1300 may allow light to pass through and to be incident on the first camera actuator. The third camera actuator 1300 may include an opening through which light is incident and an opening through which light is emitted.

The third camera actuator 1300 may include a main barrel, a barrel cover, a front cover tape, an upper cover tape, and a rear cover tape.

The circuit board 1600 may be disposed at a rear end of the second camera actuator 1200. The circuit board 1500 may be electrically connected to the second camera actuator 1200 and the first camera actuator 1100. Furthermore, a plurality of circuit boards 1300 may be provided.

The first camera actuator 1100, the second camera actuator 1200, and the circuit board 1600 may be sequentially disposed in the first direction.

The camera module according to the embodiment may include one camera module or a plurality of camera modules. For example, the plurality of camera modules may include a first camera module and a second camera module. Furthermore, the camera module may be interchangeably referred to as a "sensor device," a "camera device," a "camera module," a "camera device," an "imaging device," an "imaging module," or an "imaging device."

Further, the first camera module may include one or a plurality of actuators. For example, the first camera module may include the first camera actuator 1100, the second camera actuator 1200, and the third camera actuator 1300.

Further, the second camera module may be disposed in a predetermined housing (not shown) and include an actuator (not shown) capable of driving a lens unit. The actuator may be a voice coil motor, a micro actuator, a silicon actuator, or the like and applied in various ways such as capacitive, thermal, bimorph, and electrostatic methods, but is not limited thereto. In addition, in the present specification, the camera actuator may be referred to as an actuator or the like. In addition, a camera module including a plurality of camera modules may be mounted in various electronic devices such as a mobile terminal. Furthermore, the actuator may be a device which moves or tilts a lens or an optical member. However, hereinafter, the actuator will be described as including a lens or an optical member. Furthermore, the actuator may be referred to as a 'lens transfer device,' a 'lens movement device,' an 'optical member transfer device,' an 'optical member movement device,' or the like.

In the present specification, a bottom surface refers to one side in the second direction. Further, the second direction is the X-axis direction in the drawing and may be interchangeably referred to as a first axis direction or the like. A third direction is a Y-axis direction in the drawing and may be interchangeably referred to as a second axis direction or the like. The first direction is a direction perpendicular to the second direction. In addition, the first direction is the Z-axis direction in the drawing and may be interchangeably referred to as a third axis direction or the like. The first direction is a direction perpendicular to both the second direction and the third direction. The first direction may be a direction in which incident light is refracted. Here, the second direction (the X-axis direction) corresponds to a direction of an optical axis of incident light, and the first direction (the Z-axis direction) and the third direction (the Y-axis direction) are directions perpendicular to the optical axis. In addition, the second direction may be an incident direction of light. In addition, in the following description of the camera module 1000, the first direction corresponds to the optical path, and the following description will be made based thereon.

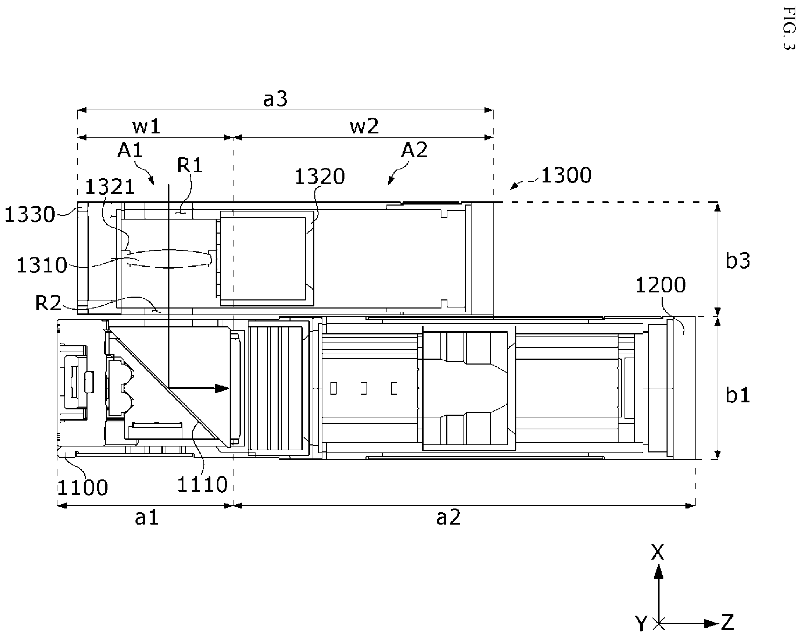

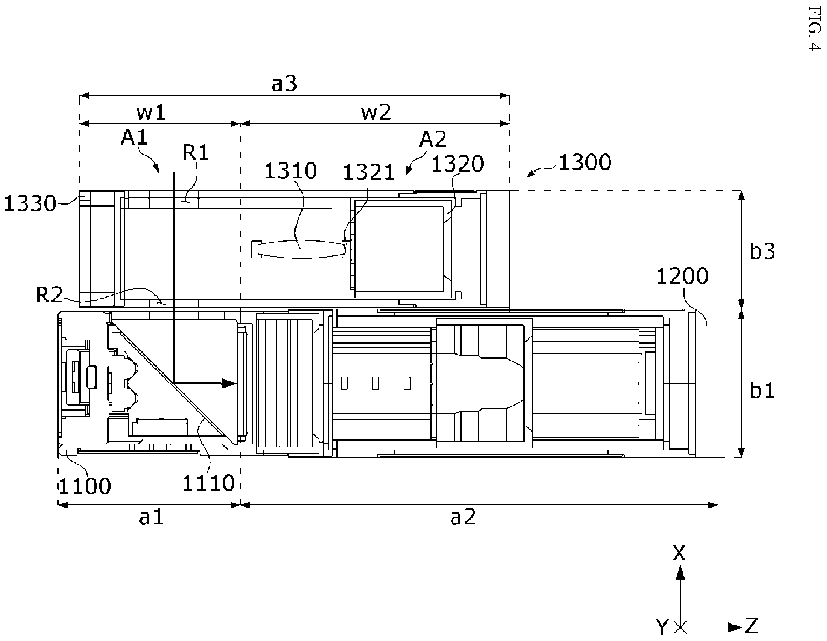

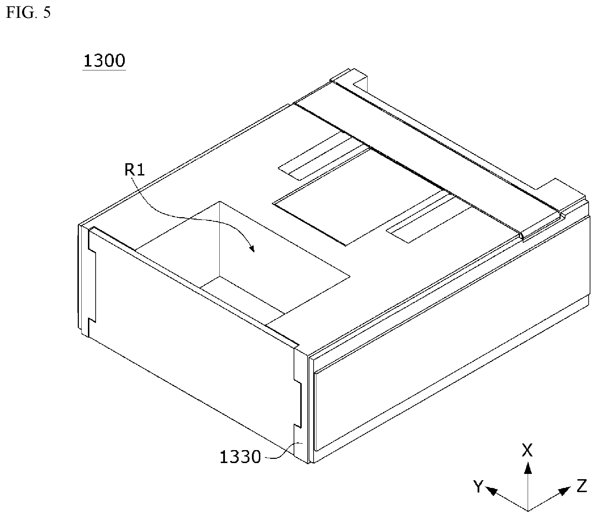

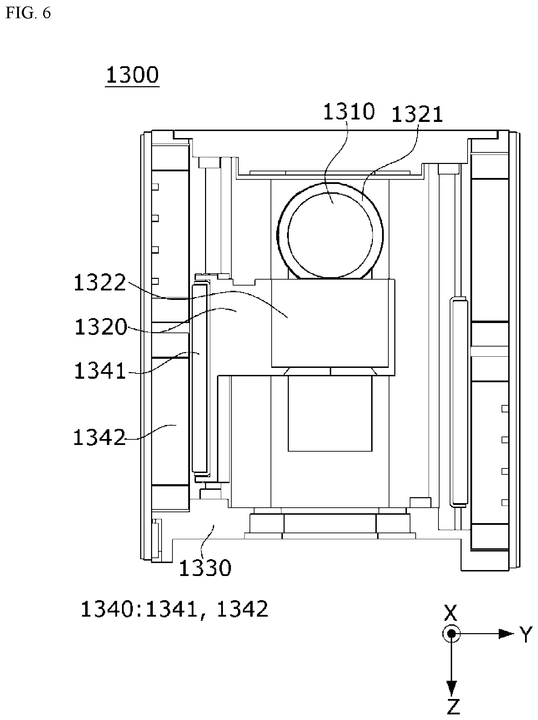

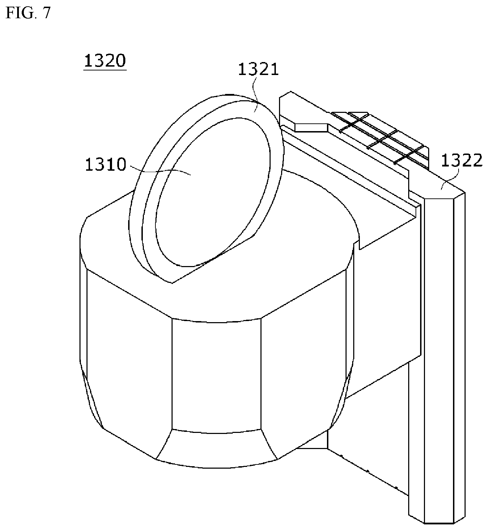

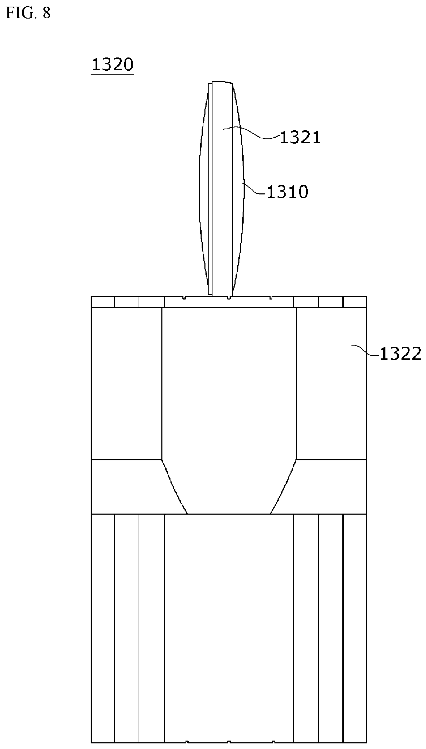

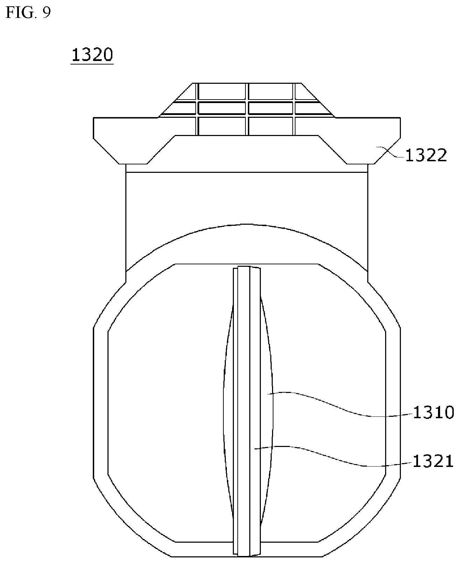

FIG. 3 is a cross-sectional view along line AA in FIG. 1, FIG. 4 is a cross-sectional view showing a state in which the lens assembly according to the embodiment has moved in FIG. 3, FIG. 5 is a perspective view of a third camera actuator according to the embodiment, FIG. 6 is a cross-sectional view taken along line BB in FIG. 5, FIG. 7 is a perspective view of the lens assembly according to the embodiment, FIG. 8 is a side view of the lens assembly according to the embodiment, and FIG. 9 is a top view of the lens assembly according to the embodiment.

Referring to FIGS. 3 to 6, the camera module 1000 according to the embodiment may include the third camera actuator 1300.

The third camera actuator 1300 may include a magnification lens 1310. The third camera actuator 1300 may be an actuator which drives the magnification lens 1310. The third camera actuator 1300 may move the magnification lens 1310 in the first direction. The third camera actuator 1300 may move the magnification lens 1310 in a lateral direction. The magnification lens 1310 may be disposed such that a lens surface faces the incident direction of light (the second direction). The camera actuator 1300 may move the magnification lens 1310 in a direction perpendicular to a direction in which the lens surface of the magnification lens 1310 faces. The third camera actuator 1300 may move the magnification lens 1310 in a direction perpendicular to the incident direction of light. The third camera actuator 1300 may move the magnification lens 1310 in the first direction such that incident light passes through the magnification lens 1310. The magnification lens 1310 may be fixed to a lens assembly 1320. The magnification lens 1310 may be fixed to a fixing portion 1321 of the lens assembly 1320. The camera module 1000 including the third camera actuator 1300 may increase a magnification range by moving the third camera actuator 1300 and the magnification lens 1310 in the first direction. The magnification lens 1310 may include a teleconverter lens.

The magnification lens 1310 may or may not overlap the prism 1110 of the first camera actuator 1100 in the second direction depending on the driving of the third camera actuator 1300. The magnification lens 1310 may or may not overlap the prism 1110 in the second direction depending on the movement of the lens assembly 1320 of the third camera actuator 1300. When the magnification lens 1310 is disposed to overlap the prism 1110 in the second direction, the magnification range of the camera module 1000 may be extended. For example, the magnification lens 1310 may extend the magnification range up to four times. In this case, when the magnification lens 1310 is disposed not to overlap the prism 1110 in the second direction, when the magnification range of the camera module 1000 is four times to eight times, in a case in which the magnification lens 1310 is disposed to overlap the prism 1110 in the second direction, the magnification range of the camera module 1000 may be extended up to sixteen times to thirty-two times. As a result, when the third camera actuator 1300 according to the embodiment is included, not only an existing magnification range of the camera module 1000 but also an expanded magnification range may be simultaneously implemented.

The third camera actuator 1300 may include the lens assembly 1320. The lens assembly 1320 may be disposed in the third camera actuator 1300 and move the magnification lens 1310. The lens assembly 1320 may move in the first direction. The lens assembly 1320 may include the fixing portion 1321. The fixing portion 1321 may be in contact with the magnification lens 1310 and fix the magnification lens 1310 to the lens assembly 1320. The fixing portion 1321 may be disposed to surround a periphery of the magnification lens 1310. A length of the periphery of the fixing portion 1321 may be greater than a length of the periphery of the magnification lens 1310. The fixing portion 1321 may protrude in the first direction from one surface of the lens assembly 1320. A width in the second direction of the lens assembly 1320 of the third camera actuator 1300 may be smaller than a width in the second direction of a lens assembly 1210 of the second camera actuator 1200. A movement distance in the first direction of the lens assembly 1320 of the third camera actuator 1300 may be greater than a diameter of the magnification lens 1310. The lens assembly 1320 may include a body portion 1322. The body portion 1322 may be a portion supporting the lens assembly 1320 such that the lens assembly 1320 is movable in the first direction in the third camera actuator 1300. The body portion 1322 may be connected to the fixing portion 1321. A driving magnet 1341 may be fixed to the body portion 1322. The body portion 1322 may include a groove that is in contact with a ball 1360. The body portion 1322 may overlap a coil 1342 in the third direction.

The third camera actuator 1300 may be disposed at an upper end portion of the camera module 1000. The third camera actuator 1300 may be disposed in a direction in which light is incident on the camera module 1000. Light may be incident on the camera module 1000 through the third camera actuator 1300. The third camera actuator 1300 may overlap the first camera actuator 1100 in the second direction. The third camera actuator 1300 may be disposed on the upper surface of the first camera actuator 1100. The third camera actuator 1300 may be disposed in a direction in which light is incident from the first camera actuator 1100. A portion of the third camera actuator 1300 may overlap the second camera actuator 1200 in the second direction. The third camera actuator 1300 may not overlap the image sensor in the first direction. The third camera actuator 1300 may not overlap the prism 1110 in the first direction.

The third camera actuator 1300 may include a first opening R1 through which light is incident. Light may be incident into the third camera actuator 1300 through the first opening R1. The third camera actuator 1300 may include a second opening R2 through which light is emitted. Light may be incident on the first camera actuator 1100 through the second opening R2. Light may sequentially pass through the first opening R1, the magnification lens 1310, and the second opening R2. The first opening R1 and the second opening R2 may overlap in the second direction. The first opening R1 and the second opening R2 may overlap an opening of the first camera actuator 1100 in the second direction. In addition, the first opening R1 and the second opening R2 may overlap the prism 1110 of the first camera actuator 1100 in the second direction. Light passing through the third camera actuator 1300 may be incident on the first camera actuator 1100. Light passing through the third camera actuator 1300 may pass through the opening of the first camera actuator 1100 and may be incident on the prism 1110.

The third camera actuator 1300 may include a housing 1330. The housing 1330 may surround an exterior of the third camera actuator 1300 and protect the magnification lens 1310 and the lens assembly 1320. The housing 1330 of the third camera actuator 1300 may be in contact with the first camera actuator 1100 and the second camera actuator 1200. A width in the first direction of the housing 1300 of the third camera actuator 1300 may be smaller than a sum of widths in the first direction of the first camera actuator 1100 and the second camera actuator 1200. A width in the second direction of the housing 1300 of the third camera actuator 1300 may be smaller than a width of each in the second direction of the first camera actuator 1100 and the second camera actuator 1200. The housing 1330 may include a first opening R1 and a second opening R2.

The third camera actuator 1300 may include a driving unit 1340. The driving unit 1340 may move the lens assembly 1320 in the first direction. The driving unit 1340 may move the lens assembly 1320 in the first direction through an electromagnetic force. The driving unit 1340 may include the driving magnet 1341 and the coil 1342. The driving magnet 1341 and the coil 1342 may move the lens assembly 1320 in the first direction. Further, the coil 1342 may face the driving magnet 1341 in the third direction (the Y-axis direction) perpendicular to the first direction. Further, the coil 1342 may generate an electromagnetic force with the facing driving magnet 1341 to move the lens assembly 1320.

The driving unit 1340 may include the driving magnet 1341. For example, the driving magnet 1341 may be disposed on the lens assembly 1320. This position may also be reversed.

In the embodiment, the driving magnet 1341 may be disposed on the lens assembly 1320. The driving magnet 1341 may be fixed to the lens assembly 1320. The driving magnet 1341 may be adhered to the lens assembly 1320 with an adhesive. The driving magnet 1341 may be disposed in the housing 1330. The driving magnet 1341 may be disposed between the coil 1342 and the lens assembly 1320. The driving magnet 1341 may be disposed on an inner side of the coil 1342. The driving magnet 1341 may not overlap the magnification lens 1310 in the third direction.

The driving magnet 1341 may overlap the coil 1342 in a direction perpendicular to the optical axis. The driving magnet 1341 may be disposed to overlap the coil 1342 in the third direction (the Y-axis direction) perpendicular to the first direction. The driving magnet 1341 may face the coil 1342 in the Y-axis direction perpendicular to the first direction. The driving magnet 1341 may be disposed to face the coil 1342. The driving magnet 1341 may be disposed to face the coil 1342 in the Y-axis direction perpendicular to the first direction. The driving magnet 1341 may be opposite to the coil 1342. The driving magnet 1341 may face the coil 1342. The driving magnet 1341 may be disposed at a position corresponding to the coil 1342. The driving magnet 1341 may interact with the coil 1342. The driving magnet 1341 may electromagnetically interact with the coil 1342. The driving magnet 1341 may move. The driving magnet 1341 may be movably disposed. For example, the coil 1342 may generate an electromagnetic force through electromagnetic interaction with the driving magnet 1341. In this case, an electromagnetic force is applied to the coil 1342, but since the coil 1342 is fixed, the driving magnet 1341 of the lens assembly 1320 may move in the first direction. The driving magnet 1341 may move together with the lens assembly 1320. The driving magnet 1341 may move in the first direction. When a current is applied to the coil 1342, the driving magnet 1341 may move in the first direction.

The driving unit 1340 may include the coil 1342. The coil 1342 may be disposed on a board 1350. The coil 1342 may be disposed on an inner surface of the board 1350. The coil 1342 may be disposed outside the driving magnet 1341. The coil 1342 may be disposed between the board 1350 and the driving magnet 1341. The coil 1342 may be fixed. The coil 1342 may remain in a fixed state even when the lens assembly 1320 is driven. The coil 1342 may interact with the driving magnet 1341. The coil 1342 may be opposite to the driving magnet 1341. The coil 1342 may face the driving magnet 1341. The coil 1342 may be disposed at a position corresponding to the driving magnet 1341. The coil 1342 may overlap the driving magnet 1341 in the direction perpendicular to the optical axis. The coil 1342 may overlap the driving magnet 1341 in the Y-axis direction perpendicular to the first direction. The coil 1342 may overlap the driving magnet 1341 in the third direction.

The third camera actuator 1300 may include the board 1350. The board 1350 may be disposed on a side surface of the housing 1330. The coil 1342 may be disposed on the board 1350. The board 1350 may overlap the lens assembly 1320 and the driving magnet 1341 in the third direction.

The third camera actuator 1300 may include a ball (not shown). The ball may guide the movement of the lens assembly 1320 in the first direction. The ball may be disposed between the lens assembly 1320 and the housing 1330. The ball may be disposed between the lens assembly 1320 and the housing 1330 in the Y-axis direction. The ball may be disposed in a groove of the lens assembly 1320. The ball may be disposed in a groove of the housing 1330. The ball may overlap the driving magnet 1341 in the third direction. The ball may have a spherical shape. The ball may be formed of a metal. The ball may be formed of a non-magnetic material. The surface of the ball may be coated with grease.

A width a3 of the third camera actuator 1300 in the first direction may be greater than a width a1 in the first direction of the first camera actuator 1100. The width a3 of the third camera actuator 1300 in the first direction may be smaller than the sum of the width a1 of the first camera actuator 1100 in the first direction and a width a2 of the second camera actuator 1200 in the first direction. A width b3 of the third camera actuator 1300 in the second direction may be smaller than a width b1 in the second direction of the first camera actuator 1100 and the second camera actuator 1200.

The third camera actuator 1300 may include a first region A1 overlapping the first camera actuator 1100 in the second direction and a second region A2 overlapping the second camera actuator 1200 in the second direction. A width w1 of the first region A1 in the first direction may be smaller than a width w2 of the second region A2 in the first direction.

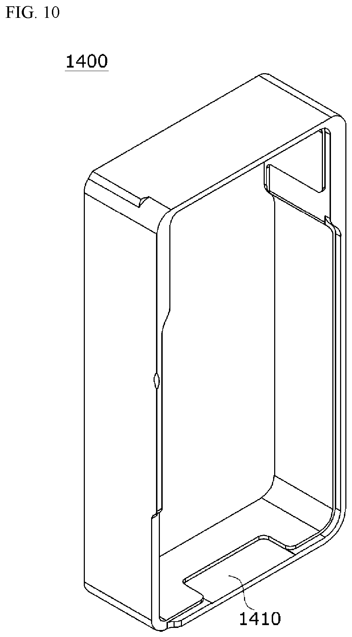

FIG. 10 is a perspective view of a body according to the embodiment.

Referring to FIGS. 1, 2, and 10, the camera module 1000 according to the embodiment may include the body 1400.

The body 1400 may surround the shield can 1500. The body 1400 may be disposed outside the camera module 1000. For example, the body 1400 may surround the first camera actuator 1100, the second camera actuator 1200, the third camera actuator 1300, the circuit board 1600, the shield can 1500, and the like which are located inside the camera module 1000. With this configuration, the body 1400 may absorb external impacts and prevent the introduction of foreign substances or the like into the camera module 1000. In other words, the body 1400 may improve the reliability of the camera module 1000.

Specifically, the body 1400 may be located at a side portion of the camera module 1000. Accordingly, the body 1400 may surround side surfaces of the first camera actuator 1100, the second camera actuator 1200, the third camera actuator 1300, the circuit board 1600, and the shield can 1500.

For example, the body 1400 may surround an exterior of the shield can 1500. The body 1400 may be in contact with the shield can 1500. The body 1400 may include an Al bracket. With this configuration, the body 1400 may improve structural stability and perform effective heat dissipation.

The body 1400 may include a body groove 1410. The body groove 1410 may overlap the image sensor in the first direction. In addition, the body groove 1410 may be located at a rear end of the circuit board 1600. Accordingly, a portion of the body groove 1410 may overlap the circuit board 1600 in the first direction. In addition, a portion of the body groove 1410 may also overlap the first camera actuator 1100 and the second camera actuator 1200 in the first direction.

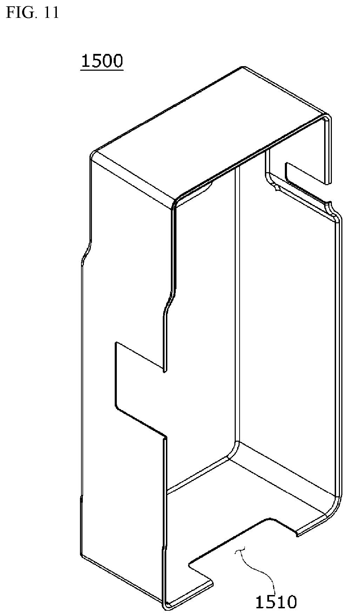

FIG. 11 is a perspective view of a shield can according to the embodiment.

Referring to FIGS. 1, 2, and 11, the camera module 1000 according to the embodiment may include the shield can 1500 surrounding the circuit board 1600.

The shield can 1500 may surround the circuit board 1600. The shield can 1500 may surround the first, second, and third camera actuators 1100, 1200, and 1300 from the outside. An outer surface of a side portion of the shield can 1500 may be in contact with an inner surface of the body 1400. A width of the shield can 1500 in the X-axis or first direction may be smaller than a width of the body 1400 in the X-axis or first direction. The shield can 1500 may include a groove 1510. The groove 1510 may be disposed in one surface of the shield can 1500. The shield can 1500 may include an opening through which light is incident. The opening may be disposed in one surface of the shield can 1500. Light passing through the opening of the shield can 1500 may be incident into the third camera actuator.

The groove 1510 may pass through a portion of one surface of the shield can 1500. The groove 1510 may have an opening shape with a certain width and depth. For example, the groove 1510 may include a rectangular opening. The groove 1510 may facilitate the connection with the body 1400 disposed to surround an exterior of the shield can 1500. Additionally, heat dissipation may be facilitated by forming the groove 1510.

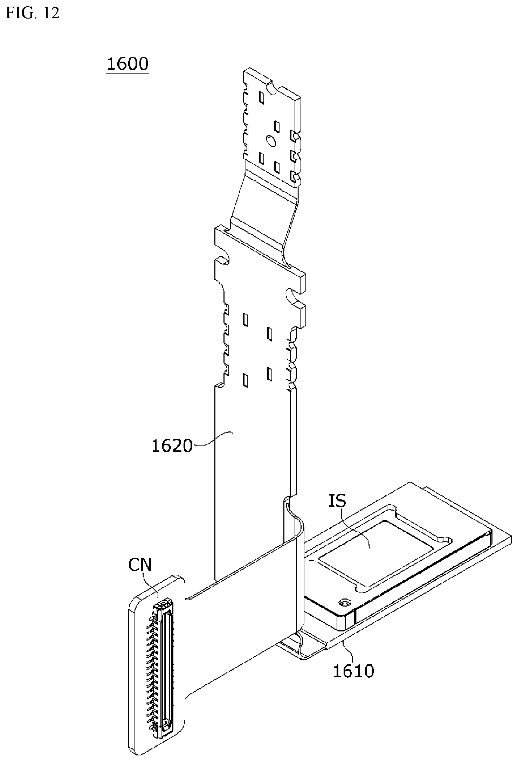

FIG. 12 is a perspective view of a circuit board according to the embodiment.

Referring to FIGS. 1, 2, and 12, the camera module 1000 according to the embodiment may include the circuit board 1600.

The circuit board 1600 may include an image sensor IS and fix the image sensor IS in the camera module 1000. The circuit board 1600 may be disposed inside the shield can 1500. In addition, the circuit board 1600 may be electrically connected to another camera module in a terminal or a processor of the terminal. Through this, the above-described camera actuator and the camera module including the same may transmit and receive various signals in the terminal. The circuit board 1600 may include a circuit board having a wiring pattern that can be electrically connected, such as a rigid printed circuit board (rigid PCB), a flexible printed circuit board (flexible PCB), and a rigid flexible printed circuit board (rigid flexible PCB). However, the embodiment is not limited to these types.

The circuit board 1600 may include a first unit board 1610, a second unit board 1620, an image sensor IS, and a connector CN. The first unit board 1610 may fix the image sensor IS. The image sensor IS may be disposed on one surface of the first unit board 1610. The first unit board 1610 and the image sensor IS may be electrically connected. The image sensor IS may be located on an inner surface of the first unit board 1610. For example, the image sensor IS may be in contact with the inner surface of the first unit board 1610.

The second unit board 1620 may be located at a side portion of the camera module 1000. The second unit board 1620 may be connected to the first unit board 1610. The second unit board 1620 may be connected to the connector CN. The image sensor IS may receive light. The image sensor IS may receive light and convert the received light into an electrical signal. In addition, the image sensor IS may include a plurality of pixels in an array form. Further, the image sensor IS may be located on the optical axis. The image sensor IS may be disposed at a rear end of the second camera actuator 1200. The image sensor IS may be disposed on the first unit board 1610. The image sensor IS may be electrically connected to the first unit board 1610. The image sensor IS may be disposed on the same optical axis as the first unit board 1610. The connector CN may be connected to the second unit board 1620. The sensor module or circuit board may be electrically connected to an external electronic device through the connector CN. For example, the connector CN may be electrically connected to a processor or the like of an electronic device such as a terminal.

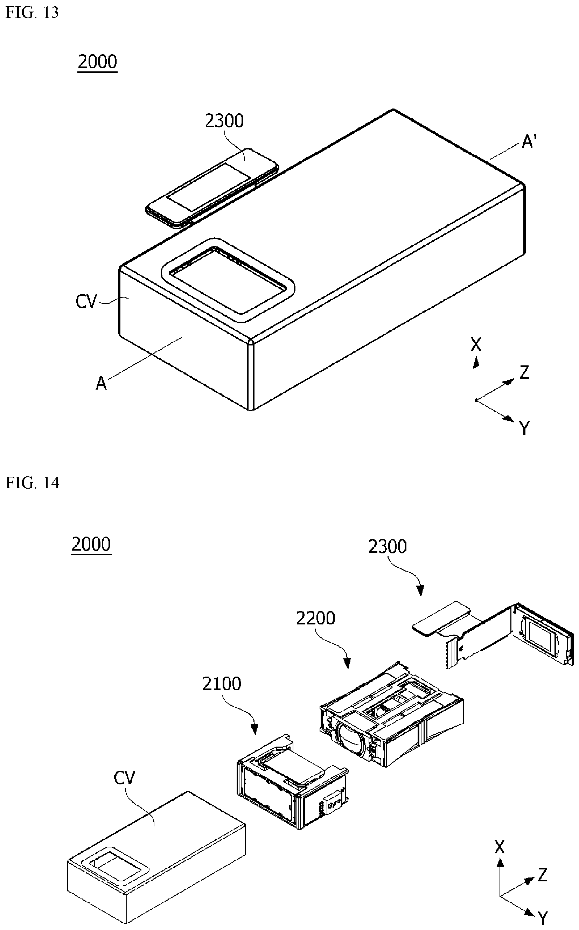

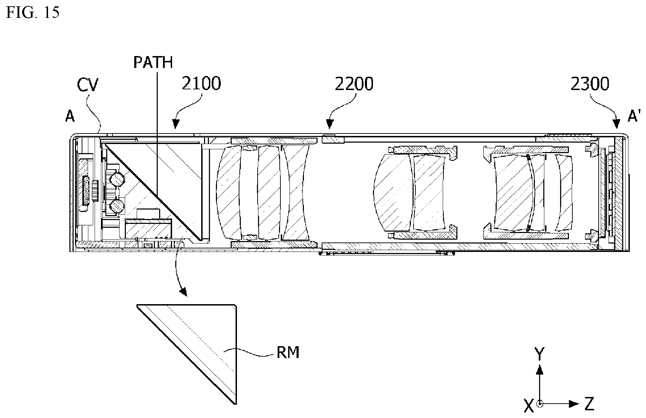

FIG. 13 is a perspective view of a camera module according to an embodiment, FIG. 14 is an exploded perspective view of the camera module according to the embodiment, and FIG. 15 is a cross-sectional view along line AA' in FIG. 13.

Referring to FIGS. 13 and 14, the camera module 2000 according to an embodiment may include a cover CV, an OIS actuator 2100, a camera actuator 2200, and a circuit board 2300.

The cover CV may cover the OIS actuator 2100 and/or the camera actuator 2200. The coupling force between the OIS actuator 2100 and the camera actuator 2200 may be improved by the cover CV.

Furthermore, the cover CV may be made of a material that performs electromagnetic shielding. Accordingly, the OIS actuator 2100 and the camera actuator 2200 in the cover CV may be easily protected.

In the embodiment, the OIS actuator 2100 may change an optical path. In the embodiment, the OIS actuator 2100 may vertically change the optical path through an internal optical member (for example, a mirror or a prism). With this configuration, even when the thickness of a mobile terminal is reduced, a lens configuration greater than the thickness of the mobile terminal may be disposed in the mobile terminal through a change in the optical path, and thus magnification, auto-focus (AF), and OIS functions may be performed.

The OIS actuator 2100 may change the optical path from the second direction to the third direction.

Additionally, the OIS actuator 2100 may include a lens disposed in a predetermined barrel (not shown). For example, the lens may include a fixed focal length lens. The fixed focal length lens may also be referred to as a "single focal length lens" or a "prime lens."

The camera actuator 2200 may be disposed at a rear end of the OIS actuator 2100. The camera actuator 2200 may be coupled to the OIS actuator 2100. Further, the camera actuator 2200 and the OIS actuator 2100 may be coupled in various ways.

In addition, the camera actuator 2200 may be a zoom actuator or an AF actuator. For example, the camera actuator 2200 may support one or a plurality of lenses and move the lenses in response to a control signal from a predetermined control unit to perform an auto-focus function or a zoom function.

The circuit board 2300 may be disposed at a rear end of the camera actuator 2200. The circuit board 2300 may be electrically connected to the camera actuator 2200 and the OIS actuator 2100. In addition, a plurality of circuit boards 2300 may be provided.

The circuit board 2300 may be connected to a housing of the camera actuator 2200, and an image sensor may be provided. Furthermore, a base portion including a filter may also be seated on the circuit board 2300.

The camera module according to the embodiment may include one camera module or a plurality of camera modules. For example, the plurality of camera modules may include a first camera module and a second camera module. In addition, as described above, the camera module may be interchangeably referred to as a "camera apparatus," a "camera device," an "imaging apparatus," an "imaging module," or an "imaging device."

Further, the first camera module may include one or a plurality of actuators. For example, the first camera module may include the OIS actuator 2100 and the camera actuator 2200.

Further, the second camera module may be disposed in a predetermined housing (not shown) and include an actuator (not shown) capable of driving a lens unit. The actuator may be a voice coil motor, a micro actuator, a silicon actuator, or the like and applied in various ways such as capacitive, thermal, bimorph, and electrostatic methods, but is not limited thereto. In addition, in the present specification, the camera actuator may be referred to as an actuator or the like. In addition, a camera module including a plurality of camera modules may be mounted in various electronic devices such as a mobile terminal.

Referring to FIG. 15, the camera module according to an embodiment may include the OIS actuator 2100 that performs an OIS function and the camera actuator 2200 that performs a zoom function and an AF function.

Light may be incident into the camera module through an opening region located in an upper surface of the OIS actuator 2100. That is, light may be incident into the inside of the OIS actuator 2100 in an optical axis direction (for example, the Y-axis direction), and the optical path may be changed to a vertical direction (for example, the Z-axis direction) through the optical member. Further, light may pass through the camera actuator 2200 and may be incident on the image sensor located at one end of the camera actuator 2200 (PATH).

Further, with this configuration, the camera module according to the embodiment may improve the spatial limitations of the OIS actuator and the camera actuator by changing the optical path. That is, the camera module according to the embodiment may expand the optical path while the thickness of the camera module is minimized in response to a change in the optical path. Furthermore, it should be understood that the camera actuator may also provide a high range of magnification by controlling a focus or the like in the expanded optical path.

In addition, the camera module according to the embodiment may implement OIS by controlling the optical path through the OIS actuator, thereby minimizing the occurrence of decentering or tilt phenomena and achieving the best optical characteristics.

Furthermore, the camera actuator 2200 may include an optical system and a lens driving unit. For example, at least one of a first lens assembly, a second lens assembly, a third lens assembly, and a guide pin may be disposed in the camera actuator 2200.

Additionally, the camera actuator 2200 may include a coil and a magnet to perform a high-magnification zoom function.

For example, although the first lens assembly and the second lens assembly may be moving lenses that move through coils, magnets, and guide pins, and the third lens assembly (not shown) may be a fixed lens, the present invention is not limited thereto. For example, the third lens assembly may function as a focator that forms a light image on a specific location, and the second lens assembly may function as a variator that reforms the image formed in the third lens assembly, which is a focator, on a different location. Meanwhile, the second lens assembly may have a significant change in magnification due to a significant change in distance to the subject or an image distance, and the second lens assembly, which is a variator, may play an important role in the focal length or magnification change of the optical system. Meanwhile, an image point that is formed in the second lens assembly, which is a variator, may vary slightly depending on the location thereof. Thus, the first lens assembly may perform a position compensation function for the image formed by the variator. For example, the first lens assembly may function as a compensator, which functions to accurately form the image point formed in the second lens assembly, which is a variator, on an actual position of the image sensor. For example, the first lens assembly and the second lens assembly may be driven by an electromagnetic force generated by the interaction of the coil and the magnet.

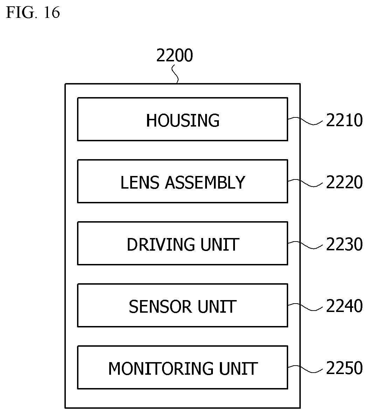

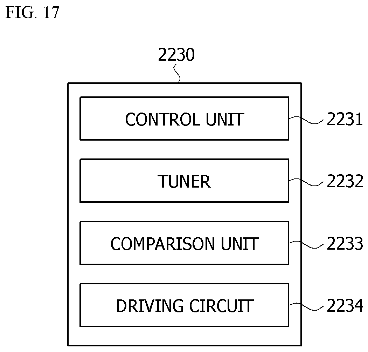

FIG. 16 is a configuration diagram of a camera actuator according to an embodiment, and FIG. 17 is a configuration diagram of a driving unit according to an embodiment.

Referring to FIG. 16, the camera actuator 2200 may include a housing 2210, a lens assembly 2220, a driving unit 2230, a sensor unit 2240, and a monitoring unit 2250.

The housing 2210 may form an outer wall of the camera actuator 2200. The lens assembly 2220, the driving unit 2230, the sensor unit 2240, and the monitoring unit 2250 may be disposed inside the housing 2210.

The lens assembly 2220 may be a moving lens that moves through a coil, a magnet, and a guide pin. The lens assembly 2220 may include a first lens assembly and a second lens assembly. The first lens assembly may perform a function of a variator that reforms a condensed and formed image at a different location. Meanwhile, the first lens assembly may have a significant change in magnification due to a significant change in distance to the subject or an image distance, and the first lens assembly, which is a variator, may play an important role in the focal length or magnification change of the optical system. Meanwhile, an image point that is formed in the first lens assembly, which is a variator, may vary slightly depending on the location thereof. Thus, the second lens assembly may perform a position compensation function for the image formed by the variator. For example, the second lens assembly may function as a compensator, which functions to accurately form the image point formed in the first lens assembly, which is a variator, on an actual position of the image sensor. For example, the first lens assembly and the second lens assembly may be driven by an electromagnetic force generated by the interaction of the coil and the magnet.

The lens assembly 2220 may be disposed inside the housing 2210. The lens assembly 2220 may move inside the housing 2210 in the optical axis direction by the driving unit 2230. The lens assembly 2220 may be disposed to be spaced apart from each other in the optical axis direction. The lens assembly 2220 may be driven by a coil and a magnet. A magnet yoke may be disposed on the lens assembly 2220 to fix the magnet.

The lens assembly 2220 may move by a certain distance range in the optical axis direction. The lens assembly 2220 may move a certain distance according to the driving signal of the driving unit 2230. The driving of the lens assembly 2220 may vary depending on the intensity of the current applied to the driving unit 2230.

The driving unit 2230 may move the lens assembly 2220 in the optical axis direction. The driving unit 2230 may move the lens assembly 2220 up and down along the optical axis direction. The driving unit 2230 may be disposed inside the housing 2210. The driving unit 2230 may move the lens assembly 2220 using the electromagnetic force of a coil and a magnet. The driving unit 2230 may move the lens assembly 2220 by applying a current to the coil to apply an electromagnetic force to the magnet attached to the lens assembly 2220.

The sensor unit 2240 may detect the position of the lens assembly 2220. The sensor unit 2240 may detect the current position of the lens assembly 2220, generate a feedback signal according to the current position of the lens assembly 2220, and provide the feedback signal to a comparison unit 2233. The sensor unit 2240 may include a position detection element and an analog-to-digital converter. The sensor unit 2240 may detect the intensity of a magnetic field of the magnet attached to the lens assembly 2220.

The monitoring unit 2250 may measure the current of the driving unit 2230. The monitoring unit 2250 may measure the intensity of the current flowing through the driving unit 2230. The intensity of the current flowing through the driving unit 2230 may vary depending on the control range of the lens assembly required for the driving unit 2230. When the movement distance of the lens assembly 2220 is large, a higher current flows. The current of the driving unit 2230 may vary depending on the driving signal generated by a driving circuit 2234. The monitoring unit 2250 may detect the driving signal of the driving circuit 2234. The monitoring unit 2250 may measure the current of the driving unit 2230 and compare the measured current with a reference value. The range of a current with which the driving unit 2230 is drivable has a threshold. When the current of the driving unit 2230 exceeds the reference value, an integral value of an error is significantly accumulated, and even when the error value is corrected, there may be a problem in that the lens assembly 2220 does not reach a target position. The monitoring unit 2250 may compare the current of the driving unit 2230 with the reference value to determine whether the current of the driving unit 2230 is greater than the reference value. The monitoring unit 2250 may compare the current of the driving unit 2230 with the reference value to determine whether the current of the driving unit 2230 is greater than the reference value and provide the determination result to a tuner 2232.

Referring to FIG. 17, the driving unit 2230 may include a control unit 2231, a tuner 2232, a comparison unit 2233, and a driving circuit 2234.

The control unit 2231 may generate a control signal by applying a control gain to an error value provided from the comparison unit 2233. For example, the control unit 2231 may include a proportional-integral-derivative (PID) controller and perform control in a PID manner. The control unit 2231 may generate a control signal by applying a control gain according to PID control to the error value. The control unit 2231 may perform control proportional to a magnitude of the error value in a current state according to proportional control, may perform control for reducing an error in a steady state according to integral control, and may perform control for reducing overshoot by preventing a rapid change according to derivative control. The control unit 2231 may generate the control signal and provide the control signal to the driving circuit 2234.

The tuner 2232 may initialize the control gain of the control unit 2231 when the monitoring unit 2250 determines that the current of the driving unit 2230 exceeds the reference value. The tuner 2232 may receive, from the monitoring unit 2250, a determination result regarding whether the current of the driving unit 2230 exceeds the reference value. The tuner 2232 may initialize the control gain of the control unit 2231 when the monitoring unit 2250 determines that the current of the driving unit 2230 exceeds the reference value and may then return the control gain to an original state again after a certain time. The tuner 2232 may simultaneously initialize a first control gain to a third control gain to 0. In addition, the tuner 2232 may sequentially return the first control gain to the third control gain to the original state.

The comparison unit 2233 may compare the position of the lens assembly 2220 detected by the sensor unit 2240 with a target position to calculate an error value. The comparison unit 2233 may calculate an error value by comparing the target position of the lens assembly 2220 according to the signal input to the driving unit 2230 with the current position of the lens assembly 2220 according to the signal detected by the sensor unit 2240. The current position of the lens assembly 2220 detected by the sensor unit 2240 may be input to the comparison unit 2233 as a feedback signal. The movement distance and the movement direction of the lens assembly 2220 may be determined according to the error value calculated by the comparison unit 2233. The comparison unit 2233 may provide the calculated error value to the control unit 2231.

The driving circuit 2234 may generate a driving signal for moving the lens assembly 2220 according to the control signal. The driving circuit 2234 may receive the control signal provided by the control unit 2231 and generate a driving signal. The lens assembly 2220 may move from a current position to a target position according to the driving signal generated by the driving circuit 2234. The driving circuit 2234 may include an H-bridge circuit. The driving signal of the driving circuit 2234 may include a current form, and the driving circuit 2234 may provide the driving signal to the coil of the camera actuator 2200.

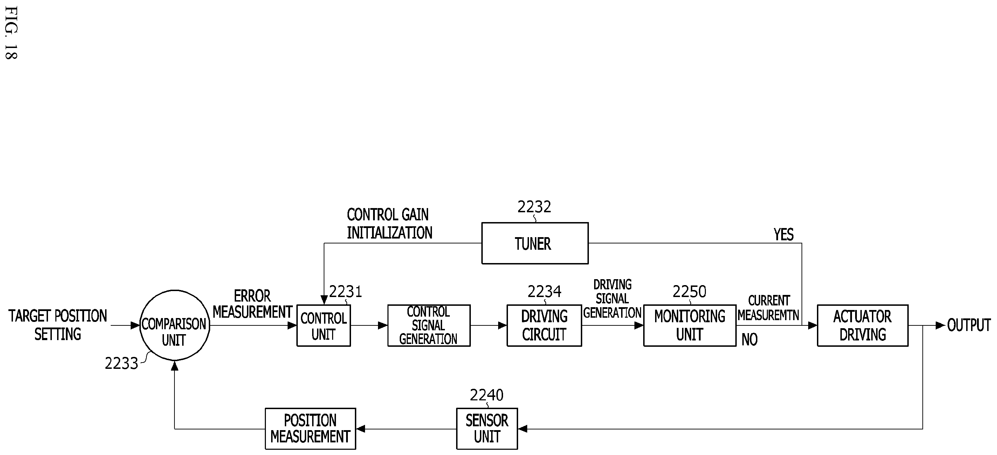

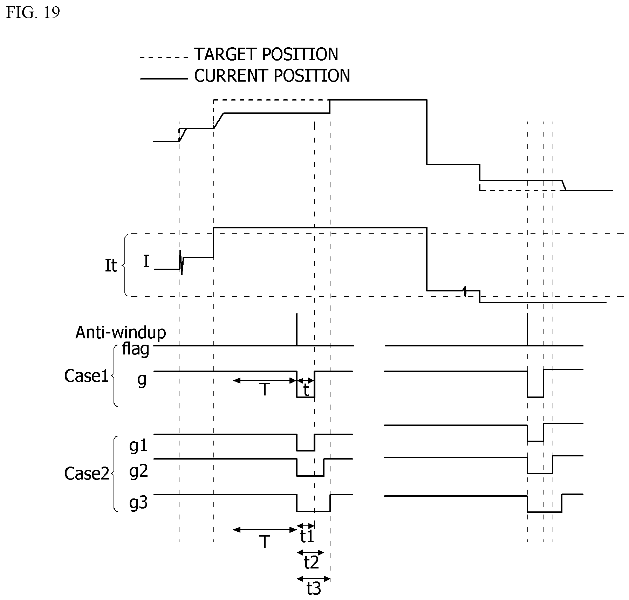

FIG. 18 is a flowchart for describing the operating principle of a camera actuator according to an embodiment, and FIG. 19 is a graph showing the state change over time of the camera actuator according to the embodiment.

Referring to FIG. 18, the camera actuator may set a target position. The target position and the movement distance of the lens assembly may be determined according to the target position set in the camera actuator. The control signal generated by the control unit 2231 may vary according to the target position of the camera actuator. The control unit 2231 may receive target position information. The control unit 2231 may receive the target position information and generate a control signal according to the target position.

The control unit 2231 may generate the control signal according to the target position information. The control unit 2231 may generate the control signal and provide the control signal to the driving circuit 2234. The control unit 2231 may provide the control signal to the driving circuit 2234 to operate the driving circuit 2234.

The driving circuit 2234 may generate a driving signal for moving the lens assembly. The driving circuit 2234 may receive the control signal from the control unit 2231 and generate a driving signal. The lens assembly may move according to the driving signal of the driving circuit 2234. The driving signal of the driving circuit 2234 may include a current or voltage form. The driving signal of the driving circuit 2234 may be applied to the coil to apply an electromagnetic force to the magnet attached to the lens assembly, thereby moving the lens assembly.

The sensor unit 2240 may measure the position of the lens assembly moved according to the driving signal. The sensor unit 2240 may set a target position and measure the current position of the moved lens assembly. The sensor unit 2240 may measure the current position of the lens assembly and provide the measurement result to the comparison unit 2233.

The comparison unit 2233 may calculate the error value of the position of the lens assembly. The comparison unit 2233 may receive current position information of the lens assembly from the sensor unit 2240. In addition, the comparison unit 2233 may receive the target position information of the lens assembly. The comparison unit 2233 may calculate an error value by comparing the target position information of the lens assembly with the current position information of the lens assembly. The comparison unit 2233 may provide the calculated error value information to the control unit 2231.

The control unit 2231 may generate a new control signal by applying a control gain according to the error value information received from the comparison unit 2233 to an existing control signal. The control unit 2231 may generate the new control signal and provide the new control signal to the driving circuit 2234.

The driving circuit 2234 may receive the new control signal and generate a corrected driving signal. The lens assembly may move according to the corrected driving signal of the driving circuit 2234. The lens assembly may move to a corrected position closer to the target position according to the corrected driving signal.

The camera actuator may repeatedly perform a process of correcting the position of the lens assembly to reduce the error value such that the lens assembly moves closer to the target position.

While this process is repeatedly performed, the monitoring unit 2250 may measure the current of the driving unit. The monitoring unit 2250 may measure the intensity of the current flowing through the driving circuit 2234. The intensity of the current flowing through the driving circuit 2234 may vary according to the driving signal generated by the driving circuit 2234. The monitoring unit 2250 may measure the current of the driving circuit 2234 and compare the current with a reference value. The reference value may be a limit current value at which the driving circuit 2234 is capable of normally operating. The monitoring unit 2250 may compare the current of the driving circuit 2234 with the reference value to determine whether the current exceeds the reference value. When the monitoring unit 2250 determines that the current of the driving circuit 2234 exceeds the reference value, the monitoring unit 2250 may transmit the determination result to the tuner 2232. When the monitoring unit 2250 determines that the current of the driving circuit 2234 is smaller than the reference value, the camera actuator may be driven according to the driving signal of the driving circuit 2234 as it is.

The tuner 2232 may initialize the control gain of the control unit 2231 when the monitoring unit 2250 determines that the current of the driving circuit 2234 exceeds the reference value. The tuner 2232 may receive, from the monitoring unit 2250, a determination result regarding whether the current of the driving circuit 2234 exceeds the reference value. The tuner 2232 may initialize the control gain of the control unit 2231 when the monitoring unit 2250 determines that the current of the driving unit 2230 exceeds the reference value and may then return the control gain to an original state again after a certain time.

The control unit 2231 may generate a control signal by applying the initialized control gain and transmit the generated control signal to the driving circuit 2234.

Referring to FIGS. 18 and 19, when a current I of the driving unit exceeds a reference value It, the current position of the lens assembly does not reach the target position.

When the current I of the driving unit exceeds the reference value It, the tuner 2232 may initialize a control gain g of the control unit 2231. The control gain g may include a first control gain to a third control gain g1, g2, and g3. The first control gain g1 may be a proportional control gain, the second control gain g2 may be an integral control gain, and the third control gain g3 may be a derivative control gain. The tuner 2232 may initialize the control gain g after a decision time T of a certain time when the monitoring unit 2250 determines that the current of the driving unit exceeds the reference value. The tuner 2232 may initialize the control gain g after the decision time T has elapsed. As a result, the camera actuator according to the embodiment may include the monitoring unit 2250 and the tuner 2232 to provide a camera actuator with reduced driving error and provide a camera actuator with reduced occurrence of defects. In addition, it is possible to increase yield by improving the frequency of identifying defective products during the manufacturing process of the camera actuator.

Referring to case 1 of FIG. 19, the tuner 2232 may set the control gain g to 0 when the monitoring unit 2250 determines that the current I of the driving unit exceeds the reference value It. In this case, the tuner 2232 may simultaneously initialize all of the control gains to 0 regardless of the type of the control gain g. In addition, the tuner 2232 may return the control gain g to an original state after a certain recovery time t following initialization of the control gain g. In this case, the tuner 2232 may simultaneously return all of the control gains to the original state regardless of the type of the control gain g.

Referring to case 2 of FIG. 19, the tuner 2232 may simultaneously set the first control gain to the third control gain g1, g2, and g3 to 0 when the monitoring unit 2250 determines that the current I of the driving unit exceeds the reference value It. In addition, the tuner 2232 may return the first to third control gains g1, g2, and g3 to an original state after certain recovery times t1, t2, and t3 after initializing the first control gain to the third control gain g1, g2, and g3. In this case, the recovery times t1, t2, and t3 of the first control gain to the third control gain g1, g2, and g3 may differ. The recovery time t1 of the first control gain g1 may be smaller than the recovery time t2 of the second control gain g2, and the recovery time t2 of the second control gain g2 may be smaller than the recovery time t3 of the third control gain g3. The tuner 2232 may return the control gains to original states thereof in the order of the first control gain g1, the second control gain g2, and the third control gain g3. By differently adjusting the recovery times t1, t2, and t3 of the first control gain to the third control gain g1, g2, and g3, more efficient control may be performed according to the driving range performance and characteristics of the camera actuator.

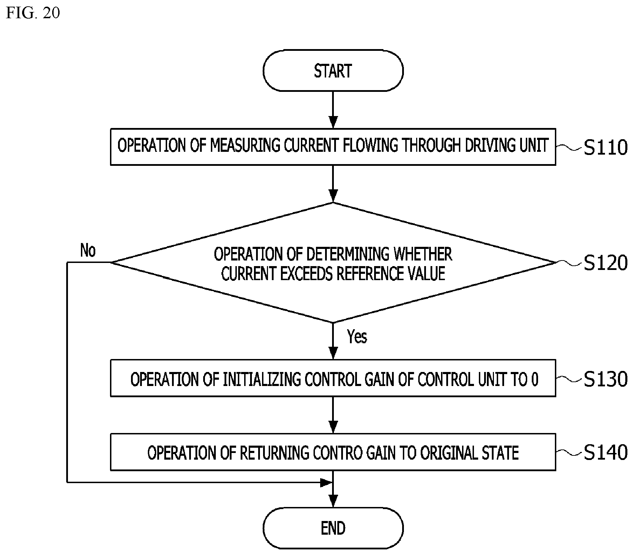

FIG. 20 is a flowchart of a method of controlling a camera actuator according to an embodiment.

Referring to FIG. 20, the method of controlling a camera actuator may include operation S110 of measuring, by a monitoring unit, a current flowing through a driving unit, operation S120 of determining, by the monitoring unit, whether the current flowing through the driving unit exceeds a reference value, and operation S130 of initializing, by a tuner, a control gain of a control unit to 0 when the current flowing through the driving unit exceeds the reference value.

In addition, the method of controlling a camera actuator may include operation S140 of returning, by the tuner, the control gain to an original state. The operation of returning the control gain to the original state may be performed after operation S130 of initializing, by the tuner, the control gain of the control unit to 0.

In addition, the method of controlling a camera actuator may include an operation of detecting, by a sensor unit, a current position of the lens assembly.

In addition, the method of controlling a camera actuator may include an operation of calculating, by a comparison unit, an error value by comparing the position of the lens assembly detected by the sensor unit with a target position.

In addition, the method of controlling a camera actuator may include an operation of generating, by the control unit, a control signal by applying a control gain corresponding to the error value.

In addition, the method of controlling a camera actuator may include an operation of generating, by the driving unit, a driving signal for moving the lens assembly according to the control signal.

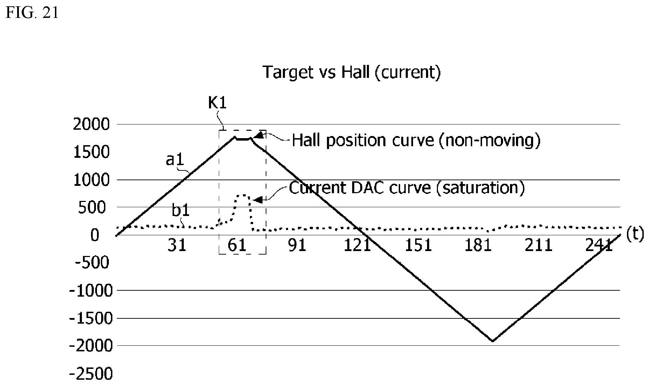

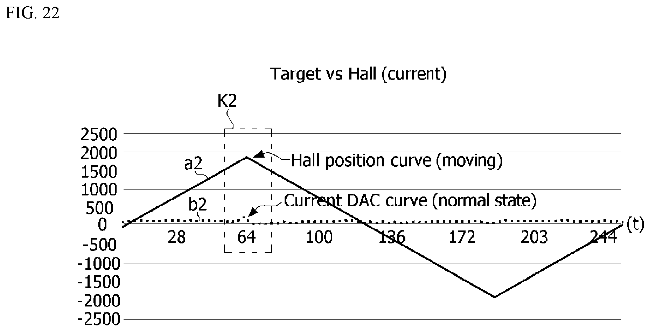

FIG. 21 is a graph showing the state change over time of a conventional camera actuator, and FIG. 22 is a graph showing the state change over time of a camera actuator according to an embodiment.

Referring to FIG. 21, it can be seen that in the conventional camera actuator, the position of a lens assembly does not reach the target position. a1 indicates the position of the lens assembly over time. b1 indicates the current value of a driving circuit over time. The target position of the lens assembly may be 1850. Referring to portion K1, it can be seen that the driving unit is in a current saturation state because the current value of the driving circuit exceeds a reference value, and accordingly, the lens assembly does not reach the target position.

Referring to FIG. 22, it can be seen that the lens assembly may reach the target position in the camera actuator according to the embodiment. a2 indicates the position of the lens assembly over time. b2 indicates the current value of the driving circuit over time. The target position of the lens assembly may be 1850. Referring to portion K2, it can be seen that the driving circuit is in a normal state where the current value does not exceed the reference value, and accordingly, the lens assembly has reached the target position. As a result, according to the embodiment, a camera actuator with reduced driving error and a method of controlling the same may be provided, and a camera actuator with reduced occurrence of defects may be provided. In addition, it is possible to increase yield by improving the frequency of identifying defective products during the manufacturing process of the camera actuator.

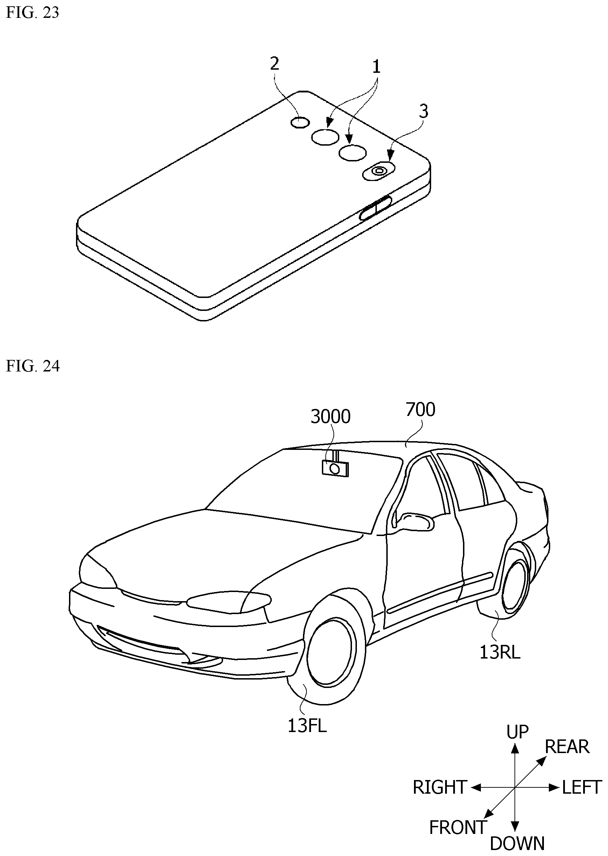

FIG. 23 is a perspective view of a mobile terminal to which the camera module according to the embodiment is applied.

Referring to FIG. 23, the mobile terminal according to the embodiment may include a camera module 1, a flash module 3, and an auto-focus device 2 that are provided on a rear surface thereof.

The camera module 1 may include an image capturing function and an auto-focus function. For example, the camera module 1 may include an auto-focus function using an image.

The camera module 1 processes image frames of still images or moving images obtained by an image sensor in a capturing mode or a video call mode.

The processed image frames may be displayed on a predetermined display unit and stored in a memory. A camera (not shown) may also be disposed on a front surface of a body of the mobile terminal.

For example, the camera module 1 may include a first camera module and a second camera module, and OIS along with an AF or zoom function may be implemented by the first camera module. In addition, AF, zoom, and OIS functions may be implemented by the second camera module. In this case, since the first camera module includes both the OIS actuator and the camera actuator described above, miniaturization of the camera module may be easily achieved by changing an optical path.

The flash module 3 may include a light-emitting element that emits light therein. The flash module 3 may be operated by the operation of the camera of the mobile terminal or through the user's control.

The auto-focus device 2 may include one of packages of surface-light-emitting laser devices as a light-emitting unit.

The auto-focus device 2 may include an auto-focus function using a laser. The auto-focus device 2 may be mainly used in conditions where it is difficult to use the auto-focus function using the image of the camera module 1, for example, in a close range of 10 m or less or in a dark environment.

The auto-focus device 2 may include a light-emitting unit including a vertical cavity surface emitting laser (VCSEL) semiconductor device and a light-receiving unit that converts light energy into electrical energy, such as a photodiode.

FIG. 24 is a perspective view of a vehicle to which the camera module according to the embodiment is applied.

For example, FIG. 24 is an exterior view of the vehicle including a vehicle driving assistance device to which the camera module according to the embodiment is applied.

Referring to FIG. 24, a vehicle 700 in the embodiment may include wheels 13FL and 13FR that rotate by a power source and a predetermined sensor. The sensor may be a camera sensor 3000 but is not limited thereto.

The camera sensor 3000 may be a camera sensor to which the camera module according to the embodiment is applied. The vehicle 700 in the embodiment may obtain image information through the camera sensor 3000 that captures a front image or a surrounding image and use the image information to determine a lane non-identification situation and create a virtual lane when the lane is not identified.

For example, the camera sensor 3000 may capture the front of the vehicle 700 to obtain the front image, and the processor (not shown) may analyze objects included in the front images to obtain image information.

For example, when objects such as lanes, adjacent vehicles, traffic obstructions, and center dividers, curbs, and street trees which correspond to indirect road markings are captured in the image captured by the camera sensor 3000, the processor may detect these objects and include information regarding these objects in the image information. In this case, the processor may obtain distance information to an object detected through the camera sensor 3000 to further supplement the image information.

The image information may be information regarding an object captured in an image. The camera sensor 3000 may include an image sensor and an image processing module.

The camera sensor 3000 may process still images or moving images obtained by an image sensor (for example, a complementary metal-oxide-semiconductor (CMOS) or a charge-coupled device (CCD)).

The image processing module may process still images or moving images obtained through the image sensor, extract necessary information, and transmit the extracted information to the processor.

In this case, although the camera sensor 3000 may include a stereo camera to improve the measurement accuracy of the object and secure more information such as a distance between the vehicle 700 and the object, the embodiment is not limited thereto.

Although the embodiments have been mainly described above, these are merely examples and are not intended to limit the present invention, and it can be seen by those skilled in the art that various modifications and applications not exemplified herein are possible without departing from the essential characteristics of the embodiments. For example, each of the components specifically shown in the embodiments may be modified and implemented. Further, it should be interpreted that differences related to the modifications and the applications are included in the scope of the embodiment defined by the appended claims.

## Claims

1. A camera module comprising:
a first camera actuator;
a second camera actuator disposed in a first direction from the first camera actuator;
a circuit board including an image sensor disposed at a rear end of the second camera actuator; and
a third camera actuator disposed at an upper end of the first camera actuator or the second camera actuator,
wherein the third camera actuator includes a magnification lens, and
the magnification lens moves at the upper end of the first camera actuator or the second camera actuator in the first direction.

2. The camera module of claim 1, wherein the first camera actuator includes a prism,
the magnification lens overlaps the prism in a second direction, and
the second direction is an incident direction of light and is a direction perpendicular to the first direction.

3. The camera module of claim 2, wherein the magnification lens is disposed perpendicular to the second direction and allows the light to pass through the prism.

4. The camera module of claim 2, wherein the third camera actuator includes a lens assembly configured to move in the first direction, and
the lens assembly is coupled to the magnification lens.

5. The camera module of claim 4, wherein the lens assembly includes a fixing portion surrounding the magnification lens, and
the fixing portion is disposed perpendicular to the second direction.

6. The camera module of claim 2, wherein a width of the third camera actuator in the first direction is greater than a width of the first camera actuator in the first direction and is smaller than a sum of the width of the first camera actuator in the first direction and a width of the second camera actuator in the first direction.

7. The camera module of claim 2, wherein a width of the third camera actuator in the first direction is greater than twice a width of the magnification lens in the first direction.

8. The camera module of claim 4, wherein a movement distance of the lens assembly in the first direction is greater than a width of the magnification lens in the first direction.

9. The camera module of claim 2, wherein the third camera actuator includes a first region overlapping the first camera actuator in the second direction and a second region overlapping the second camera actuator in the second direction.

10. The camera module of claim 9, wherein a width of the first region in the first direction is smaller than a width of the second region in the first direction.
